# EUROPÄISCHE PATENTANMELDUNG

(11) **EP 0 806 309 A1**
(43) Veröffentlichungstag der Anmeldung: **12.11.1997**
(21) Anmeldenummer: 97104258.5
(22) Anmeldetag: 13.03.1997
(51) Int. Cl.: B60D 1/46

(54) **Höhenverstellbare Zugdeichsel für Fahrzeuganhänger**

(30) Priorität: 08.05.1996 DE 19618378; 04.09.1996 DE 19635794
(71) Anmelder: BPW Bergische Achsen Kommanditgesellschaft, 51674 Wiehl (DE)
(72) Erfinder: Dowe, Günter, 51588 Nümbrecht (DE)
(74) Vertreter: Stenger, Watzke & Ring Patentanwälte

(57) **Zusammenfassung**

Die Erfindung betrifft eine höhenverstellbare Zugdeichsel für Fahrzeuganhänger, bestehend aus einem am Fahrzeuganhänger bestigbaren Deichselrohr (1) und einer an das Zugfahrzeug ankuppelbaren Zugeinrichtung (7), zwischen denen mindestens zwei ein Parallelogramm bildende Streben (4,5) angeordnet sind, die mit ihren Enden jeweils um eine waagerechte Achse (4a und 4b bzw. 5a und 5b) verschwenkbar gelagert sind. Um eine einfache Konstruktion zu schaffen und eine sichere Festlegung der Zugeinrichtung in der jeweils gewählten Stellung zu gewährleisten, sind die Streben (4,5) in jeweils einer von mehreren definierten Stellungen, die der tiefsten und höchsten sowie mindestens einer Zwischenstellung der Zugeinrichtung (7) entsprechen, durch mindestens eine formschlüssige Kupplungseinrichtung arretierbar, die aus einem bolzenförmigen, in eine Aufnahmebohrung (8) der einen Strebe (4 bzw. 5) einsetzbaren Verbindungselement (9) und einer mehrere Stellungen für das Verbindungselement (9) definierenden Rasteinrichtung an der jeweils anderen Strebe (5 bzw. 4) besteht. Die Rasteinrichtung kann als Lochreihe aus mehreren, auf einem Kreisbogenabschnitt angeordneten Löchern (10) oder als kreisbogenabschnittförmiges Segment mit einer Stirnverzahnung ausgebildet sein.

## Beschreibung

Die Erfindung betrifft eine höhenverstellbare Zugdeichsel für Fahrzeuganhänger, bestehend aus einem am Fahrzeuganhänger befestigbaren Grundkörper und einer an das Zugfahrzeug ankuppelbaren Zugeinrichtung, zwischen denen mindestens zwei ein Parallelogramm bildende Streben angeordnet sind, die mit ihren Enden jeweils um eine waagerechte Achse verschwenkbar gelagert sind.

Derartige höhenverstellbare Zugdeichseln für Fahrzeuganhänger sind in verschiedenen Ausführungen bekannt.

Bei einer aus der DE 30 00 470 C2 bekannten Ausführung ist zur Einstellung der jeweiligen Höhenlage der an das Zugfahrzeug ankuppelbaren Zugeinrichtung zwischen zwei übereinander angeordneten, ein Parallelogramm bildenden Streben eine Verriegelungseinrichtung angeordnet, die aus einer an der einen Strebe angeordneten Zahnstange und einem an der anderen Strebe angeordneten Zahnsegment besteht, das mit Hilfe eines Gewindebolzens und einer Mutter in der jeweils gewünschten Stellung an der Zahnstange festgelegt wird, so daß die das Parallelogramm bildenden Streben ihre Lage nicht verändern können. Diese bekannte Konstruktion hat den Nachteil einer umständlichen Bedienung, da das Zahnsegment nach umständlichem Lösen der auf dem Gewindebolzen angeordneten Mutter außer Eingriff mit der Zahnstange gebracht werden muß, bevor eine Veränderung der Höhenlage der Zugeinrichtung möglich ist, wobei auch das anschließende Fixieren der neuen Höhenlage eine aufwendige Betätigung der Mutter erfordert.

Um diesen Nachteil zu vermeiden, ist es weiterhin aus der deutschen Gebrauchsmusterschrift 91 16 523 bekannt, zwischen den das Parallelogramm bildenden Streben eine diagonal im Parallelogramm angeordnete, in der Länge verstellbare Einstelleinrichtung, beispielsweise in Form einer steigenden Gewindespindel anzuordnen, um eine stufenlose Verstellung der Höhenlage der Zugeinrichtung zu erreichen. Außer einem hohen Konstruktionsaufwand hat diese bekannte Ausführung den Nachteil, daß keine exakte Fixierung der Höhenlage möglich ist.

Der Erfindung liegt die **Aufgabe** zugrunde, eine höhenverstellbare Zugdeichsel der eingangs beschriebenen Art zu schaffen, die unter Aufrechterhaltung einer parallelen Verstellung der an das Zugfahrzeug ankuppelbaren Zugeinrichtung eine einfache kraft- und formschlüssige Arretierung in der jeweils gewählten Höhenlage ermöglicht.

Die **Lösung** dieser Aufgabenstellung durch die Erfindung ist dadurch gekennzeichnet, daß die Streben in jeweils einer von mehreren definierten Stellungen, die der tiefsten und höchsten sowie mindestens einer Zwischenstellung der Zugeinrichtung entsprechen, durch mindestens eine formschlüssige Kupplungseinrichtung arretierbar sind, die aus einem bolzenförmigen, in einer Aufnahmebohrung der einen Strebe einzetzbaren Verbindungselement und einer mehrere Stellungen für das Verbindungselement definierenden Rasteinrichtung an der jeweils anderen Strebe besteht.

Mit dieser erfindungsgemäßen Weiterentwicklung wird eine kompakte und leichte Ausführung einer einfachen Zugdeichsel geschaffen, die dauerhaft und ganzflächig mit einem Oberflächenschutz versehen werden kann und eine einfache Anbindung sowohl an die mit dem Zugfahrzeug kuppelbare Zugeinrichtung als auch an das Deichselrohr gestattet, wobei durch die Rasteinrichtung eine ausreichend feinstufige Unterteilung der Höhenverstellung möglich ist. Durch den formschlüssigen Eingriff des Verbindungselementes in die Aufnahmebohrung der einen Strebe und in die Rasteinrichtung der anderen Strebe wird eine zuverlässige Arretierung der jeweils gewählten Höhenlage erreicht, so daß die erfindungsgemäße Zugdeichsel auch für den Anbau von Auflaufeinrichtungen geeignet ist und sowohl für Einachs- als auch für Zweiachsanhänger verwendet werden kann.

Gemäß einem weiteren Merkmal der Erfindung kann die Rasteinrichtung als eine Lochreihe aus mehreren, auf einem Kreisbogenabschnitt angeordneten Löchern ausgebildet sein. Hierdurch ergibt sich eine besonders einfache und kostengünstige Ausführung. Um eine möglichst feine Unterteilung der stufenweisen Höheneinstellung zu erreichen, wird mit der Erfindung weiterhin vorgeschlagen, mehrere Lochreihen mit versetzt zueinander angeordneten Löchern und eine der Zahl der Lochreihen entsprechende Anzahl von Aufnahmebohrungen vorzusehen.

Bei einer alternativen Ausführungsform der Erfindung ist die Rasteinrichtung als kreisbogenabschnittförmiges Segment mit einer Stirnverzahnung ausgebildet, in die ein entsprechend verzahntes Kupplungsstück formschlüssig eingreift, das auf dem bolzenförmigen, innerhalb eines bogenförmigen Langloches im Segment bewegbaren Verbindungselement angeordnet ist. Bei dieser Ausführungsform ermöglicht die Ausbildung der Stirnverzahnung eine sehr feine Unterteilung. Außerdem kann bei dieser Kontruktion die an das Zugfahrzeug anzukuppelnde Zugeinrichtung in der Höhe verstellt werden, ohne daß das bolzenförmige Verbindungselement vollständig aus der Rasteinrichtung herausgezogen werden muß, wie dies bei der Ausbildung der Rasteinrichtung als Lochreihe erforderlich ist. Es genügt eine Aufhebung des Zahneingriffes zwischen Segment und Kupplungsstück, um eine Höhenverstellung durchzuführen.

Eine besonders zweckmäßige Gestaltung der erfindungsgemäßen Rasteinrichtung ergibt sich, wenn zwei einander gegenüberliegende Segmente und zwei auf dem Verbindungselement angeordnete Kupplungsstücke vorgesehen werden, von denen das eine Kupplungsstück mit dem Verbindungselement fest verbunden und das andere Kupplungsstück axialbeweglich auf dem Verbindungselement angeordnet und durch eine Mutter zur formschlüssigen Festlegung beider Kupplungselemente in den Stirnverzahnungen der zugehörigen Segmente anziehbar ist.

Bei einer bevorzugten Ausführungsform der Erfindung ist die eine Strebe als in der Längsmitte der Zugdeichsel liegender Träger mit U-förmigem Querschnitt und die andere Strebe als Doppelstrebe mit zu beiden Seiten des Trägers verlaufenden Teilen ausgebildet. Hierdurch ergibt sich eine besonders kompakte und auch hohe Kräfte zuverlässig übertragende Ausführung.

Gemäß einem weiteren Merkmal der Erfindung kann auch die andere Strebe als Träger mit U-förmigem Querschnitt ausgebildet sein, dessen Schenkel außerhalb der Schenkel der in der Längsmitte liegenden Strebe verlaufen. Einer der Träger kann hierbei im Bereich seiner Schenkel mit zwei parallel zueinander verlaufenden Rasteinrichtungen und der andere Träger im Bereich seiner Schenkel mit jeweils einer Aufnahmebohrung für das Verbindungselement versehen sein, das vorzugsweise als Steckbolzen ausgeführt ist.

Schließlich wird mit der Erfindung vorgeschlagen, zwischen einer Strebe und einer waagerechten Achse der anderen Strebe einen das Gewicht der höhenverstellbaren Teile zumindest teilweise ausgleichenden Kraftspeicher anzuordnen, um ein Anheben des vorderen, die Zugeinrichtung tragenden Teils der Zugdeichsel zu erleichtern. Um eine selbsttätige Höhenverstellung der Zugeinrichtung zu erreichen, kann der Kraftspeicher als steuerbarer Druckmittelzylinder ausgebildet werden.

Auf der Zeichnung sind drei Ausführungsbeispiele der höhenverstellbaren Zugdeichsel nach der Erfindung schematisch dargestellt, und zwar zeigen:
- Fig. 1: eine Seitenansicht einer ersten Ausführungsform mit in drei unterschiedlichen Stellungen gezeichneter Zugeinrichtung,
- Fig. 2: eine Draufsicht auf die Zugdeichsel nach Fig. 1 in der untersten Stellung,
- Fig. 3: einen Querschnitt gemäß der Schnittlinie III - III in Fig. 2,
- Fig. 4: eine der Fig. 1 entsprechende Seitenansicht einer zweiten Ausführungsform,
- Fig. 5: eine den Figuren 1 und 4 entsprechende Seitenansicht einer dritten Ausführungsform und
- Fig. 6: einen Querschnitt gemäß der Schnittlinie VI - VI in Figur 5.

Bei allen Ausführungen ist das mit dem Fahrgestell des nicht dargestellten Fahrzeuganhängers zu verbindende Deichselrohr 1 zu erkennen, an dessen vorderem Ende mittels zweier Lochschweißungen 2 ein aus zwei senkrecht und parallel zueinander verlaufenden Blechen bestehendes Anschlußstück 3 befestigt ist.

An diesem Anschlußstück 3 sind zwei Streben 4 und 5 mittels jeweils einer Achse 4a und 5a verschwenkbar gelagert. Die Streben 4 und 5 sind an ihrem vorderen Ende jeweils über eine Achse 4b bzw. 5b mit einem weiteren Anschlußstück 6 verbunden, das eine Zugeinrichtung 7 mit einer Zugkupplung 7a tragt, mit deren Hilfe die Zugdeichsel an ein nicht dargestelltes Zugfahrzeug ankuppelbar ist.

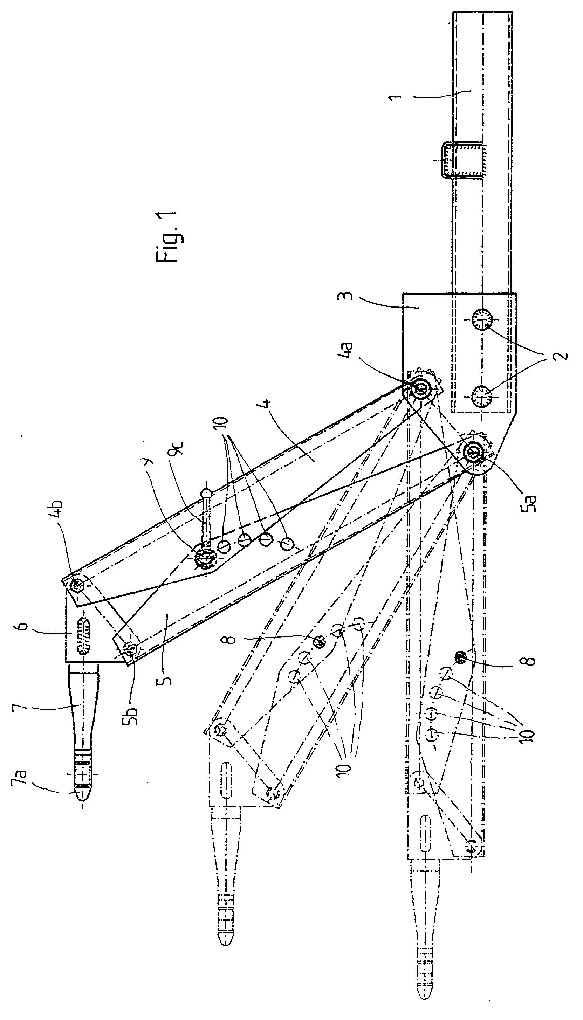

Wie insbesondere aus Fig. 1 hervorgeht, bilden die mit ihren Enden jeweils um eine waagerechte Achse 4a und 4b bzw. 5a und 5b verschwenkbar mit den Anschlußstücken 3 und 6 verbundenen Streben 4 und 5 ein Parallelogramm, das eine Höhenverstellung des die Zugeinrichtung 7 tragenden Anschlußstückes 6 ermöglicht. In Fig. 1 ist die höchste Stellung der Zugeinrichtung 7 mit ausgezogenen Linien gezeichnet, wogegen die tiefste Stellung und eine Mittelstellung mit strichpunktierten Linien dargestellt sind.

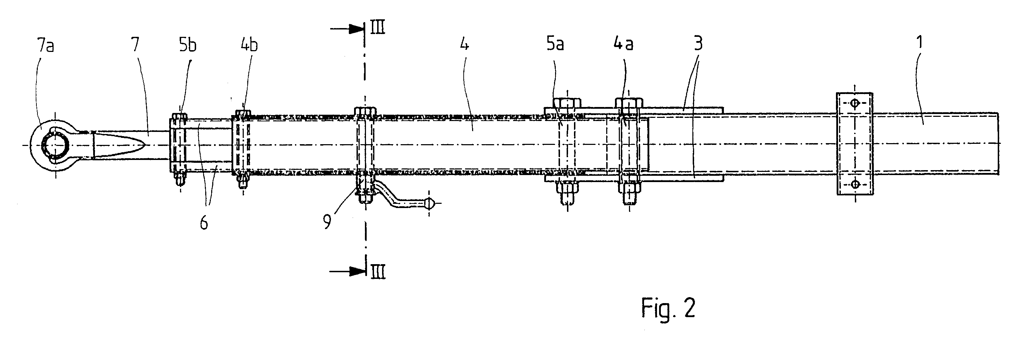

Um die Zugeinrichtung 7 in der jeweils gewünschten Höhenlage zu arretieren, ist eine formschlüssige Kupplungseinrichtung vorgesehen. Beim Ausführungsbeispiel nach den Fig. 1 bis 3 ist die Strebe 4 mit einer Aufnahmebohrung 8 für ein Verbindungselement 9 versehen, das bei allen Ausführungsbeispielen als Steckbolzen ausgeführt ist. Die jeweils andere Strebe, beim Ausführungsbeispiel nach den Fig. 1 bis 3 die Strebe 5, ist mit einer Rasteinrichtung versehen, die bei diesem Ausführungsbeispiel als Lochreihe aus mehreren Löchern 10 ausgebildet ist, die entsprechend der Relativbewegung zwischen den beiden Streben 4 und 5 bei einer Veränderung des Parallelogramms auf einem Kreisbogenabschnitt angeordnet sind.

Durch Einsetzen des als Steckbolzen ausgebildeten Verbindungselements 9 einerseits in die Aufnahmebohrung 8 der Strebe 4 und andererseits in ein Loch 10 der in der Strebe 5 ausgebildeten Lochreihe können die Streben 4 und 5 in der jeweils gewählten Stellung, d.h. in der jeweils gewünschten Höhenlage der Zugeinrichtung 7 form- und kraftschlüssig arretiert werden. In Fig. 1 ist dargestellt, daß das Verbindungselement 9 in der höchsten Stellung der Zugeinrichtung 7 in das vorderste Loch 10 und in der tiefsten Stellung der Zugeinrichtung 7 in das hinterste Loch 10 der Lochreihe eingreift und daß bei der aus insgesamt fünf Löchern 10 bestehenden Lochreihe drei Zwischenstellungen möglich sind, von denen die mittlere in Fig. 1 strichpunktiert dargestellt ist.

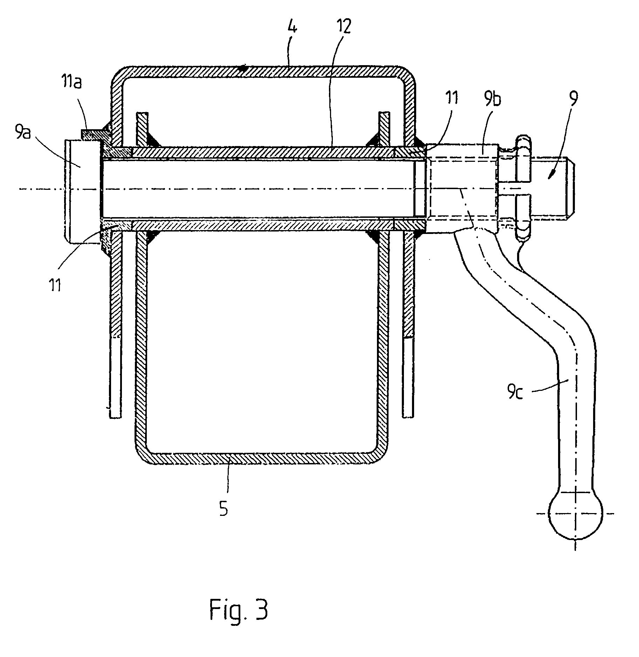

Wie am besten aus der Schnittdarstellung gemäß Fig. 3 hervorgeht, haben die Streben 4 und 5 einen U-förmigen Querschnitt mit gegeneinander weisenden und ineinander liegenden Schenkeln, die sich zumindest im Bereich der Lochreihe überdecken. Die Schnittdarstellung in Fig. 3 zeigt, daß die in beiden Schenkeln der Strebe 4 ausgebildete Aufnahmebohrung 8 durch am Schenkel der Strebe 4 angeschweißte Buchsen 11 gebildet wird, von denen die eine Buchse 11 mit einer Nase 11a für den abgeflachten Kopf 9a des als Steckbolzen ausgebildeten Verbindungselements 9 versehen ist. Auf das aus der anderen Seite der Strebe 4 herausragende, mit Gewinde versehene Ende des als Steckbolzen ausgebildeten Verbindungselements 9 ist eine mit einem Handhebel 9c versehene Mutter 9b aufschraubbar, durch die das Verbindungselement 9 in der jeweils gewünschten Lage gesichert wird.

Auch im Bereich der Löcher 10 der in den Schenkeln der Strebe 5 ausgebildeten Lochreihe sind Hülsen 12 eingeschweißt, um einen zuverlässigen Sitz des Verbindungselements 9 in der Strebe 5 zu gewährleisten.

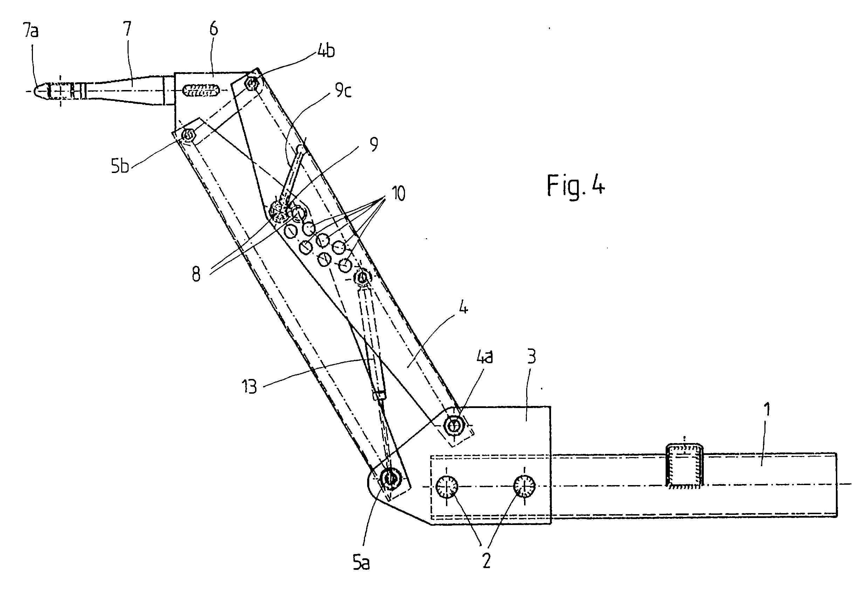

Das zweite Ausführungsbeispiel nach Fig. 4 unterscheidet sich von der voranstehend beschriebenen Ausführungsform dadurch, daß in den Schenkeln der Strebe 4 zwei Aufnahmebohrungen 8 und in den Schenkeln der Strebe 5 zwei Lochreihen aus Löchern 10 ausgebildet sind, so daß sich eine feinere Unterteilung der stufenweisen Höheneinstellung ergibt. Weiterhin zeigt die zweite Ausführungsform die Anordnung eines Kraftspeichers 13, der beim Ausführungsbeispiel mit seinem unteren Ende verschwenkbar auf der Achse 5a gelagert und mit seinem oberen Ende verschwenkbar innerhalb der Strebe 4 gelagert ist. Dieser Kraftspeicher 13 gleicht zumindest einen Teil des Gewichts der höhenverstellbaren Teil aus, um insbesondere ein Anheben der Zugeinrichtung 7 zu erleichtern. Sofern der Kraftspeicher 13 als steuerbarer Druckmittelzylinder ausgebildet wird, ist eine selbsttätige Höhenverstellung der Zugeinrichtung 7 möglich.

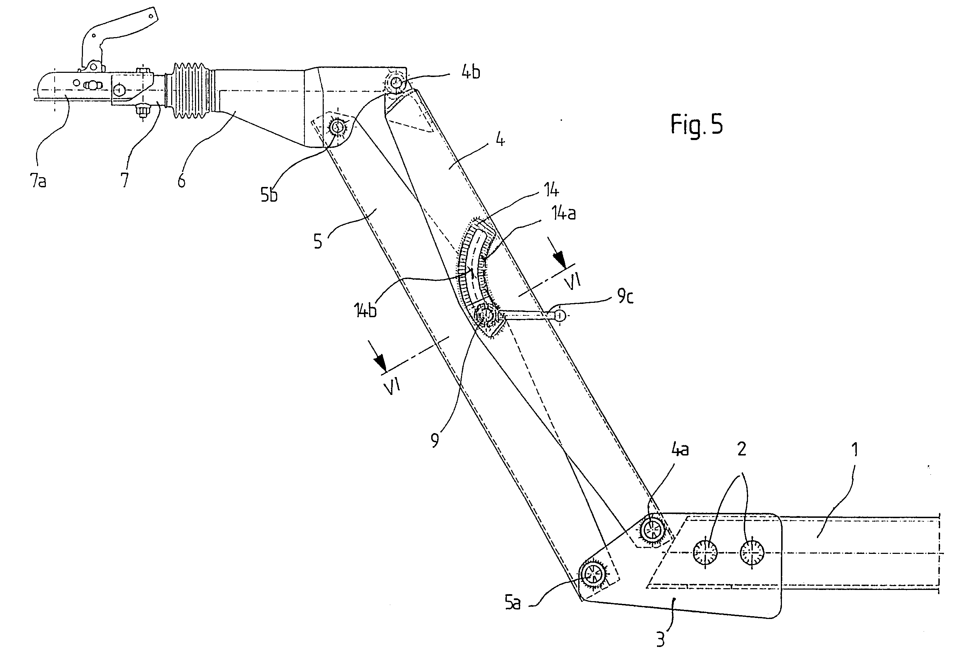

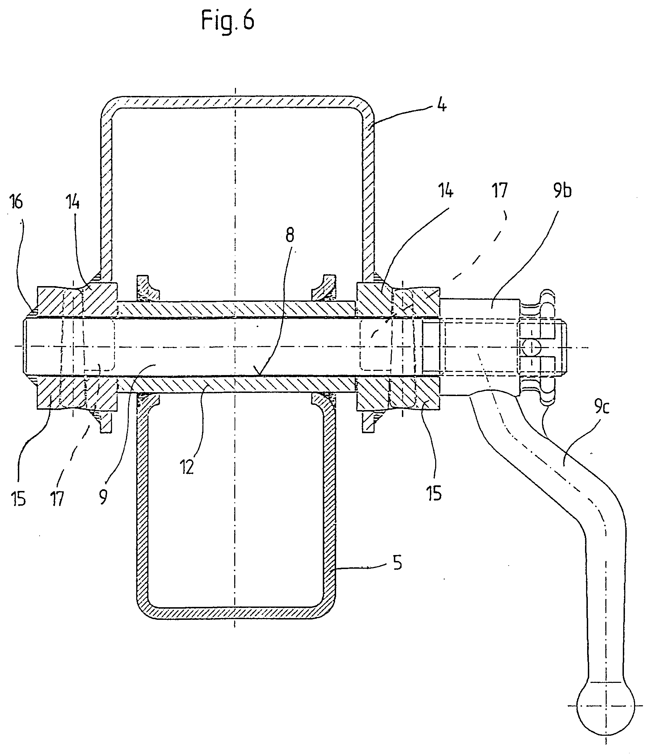

Das in den Figuren 5 und 6 dargestellte dritte Ausführungsbeispiel entspricht in seinem Grundaufbau den voranstehend erläuterten Ausführungen. Es weicht von diesen hinsichtlich der Ausbildung der Rasteinrichtung ab.

Bei der dritten Ausführungsform ist die Rasteinrichtung als Segment 14 in der Form eines Kreisbogenabschnittes ausgebildet, das mit einer Stirnverzahnung 14a versehen ist. Beim Ausführungsbeispiel umgibt diese Stirnverzahnung 14a ein bogenförmiges Langloch 14b, in dem das bolzenförmige Element 9 bewegbar ist.

Wie am besten aus der Schnittdarstellung in Figur 6 hervorgeht, sind auf dem Verbindungselement 9 zwei Kupplungsstücke 15 angeordnet, die mit einer der Stirnverzahnung 14a des Segmentes 14 entsprechenden Verzahnung ausgeführt sind. Beim Ausführungsbeispiel nach den Figuren 5 und 6 ist das eine Kupplungsstück 15 mittels einer Schweißnaht 16 auf dem freien Ende des Verbindungselements 9 befestigt, wobei das andere Kupplungsstück 15 in axialer Richtung des Verbindungselements 9 frei beweglich ist. Zur Verdrehsicherung sind die Kupplungsstücke 15 mit jeweils einer in das bogenförmige Langloch 14b eingreifenden Führungsnase 17 versehen. Die Schnittdarstellung in Figur 6 läßt weiterhin erkennen, daß die beiden Segmente 14 in entsprechende Aussparungen in den Schenkeln der Strebe 4 eingesetzt und verschweißt sind. Wie beim ersten Ausführungsbeispiel gemäß Figur 3 befindet sich auf einem Gewindeabschnitt des als Steckbolzen ausgeführten Verbindungselements 9 eine mit einem Handhebel 9c versehene Mutter 9b. Außerdem ist zu erkennen, daß die Aufnahmebohrung 8 in der Strebe 5 durch eine Hülse 12 gebildet wird.

Durch Anziehen der Mutter 9b mit Hilfe des Handhebels 9c werden die beiden Kupplungsstücke 15 mit ihren Verzahnungen in die jeweiligen Stirnverzahnungen 14a der Segmente 14 eingedrückt, so daß sich in der gewählten Stellung eine formschlüssige Arretierung der Streben 4 und 5 in der jeweils gewählten Stellung ergibt.

Um die Höhenstellung der Zugeinrichtung 7 zu verändern, ist es bei dieser Ausführungsform lediglich erforderlich, mit Hilfe des Handhebels 9c die Mutter 9b derart weit zu lösen, daß die Kupplungsstücke 15 mit Ihren Verzahnungen aus den Stirnverzahnungen 14 a der Segmente 14 heraustreten, wobei dieses Heraustreten des auf dem Verbindungselement 9 befestigten Kupplungsstückes 15 dadurch erleichtert wird, daß das gesamte Verbindungselement 9 nach Lösen der Mutter 9b axial verschoben wird. Sobald der Zahneingriff beider Kupplungsstücke 15 durch Lösen der Mutter 9b aufgehoben ist, können die Streben 4 und 5 relativ zueinander bewegt werden. Hierbei verschieben sich das Verbindungselement 9 und die dieses umgebende Hülse 12 innerhalb des bogenförmigen Langloches 14b der beiden Segmente 14. Durch die an den Kupplungsstücken 15 ausgebildeten, in das bogenförmige Langloch 14b eingreifenden Führungsnasen 17 werden die Kupplungsstücke 15 auch bei gelöstem Verbindungselement 9 verdrehsicher in der erforderlichen Zahneingriffstellung gehalten bzw. geführt. Sobald die gewünschte Stellung erreicht ist, wird durch Anziehen der Mutter 9b ein erneuter Zahneingriff zwischen den Kupplungsstücken 15 und den Segmenten 14 hergestellt, so daß sich in der neuen Höhenstellung der Zugeinrichtung 7 wiederum eine kraft- und formschlüssige Verbindung mit Hilfe der voranstehenden erläuterten Kupplungseinrichtung ergibt.

### Bezugszeichenliste:

- 1: Deichselrohr
- 2: Lochschweißung
- 3: Anschlußstück
- 4: Strebe
- 4a: Achse
- 4b: Achse
- 5: Strebe
- 5a: Achse
- 5b: Achse
- 6: Anschlußstück
- 7: Zugeinrichtung
- 7a: Zugkupplung
- 8: Aufnahmebohrung
- 9: Verbindungselement
- 9a: Kopf
- 9b: Mutter
- 9c: Handhebel
- 10: Loch
- 11: Buchse
- 11a: Nase
- 12: Hülse
- 13: Kraftspeicher
- 14: Segment
- 14a: Stirnverzahnung
- 14b: Langloch
- 15: Kupplungsstück
- 16: Schweißnaht
- 17: Führungsnase

## Patentansprüche

1. Höhenverstellbare Zugdeichsel für Fahrzeuganhänger, bestehend aus einem am Fahrzeuganhänger befestigbaren Grundkörper (Deichselrohr) und einer an das Zugfahrzeug ankuppelbaren Zugeinrichtung, zwischen denen mindestens zwei ein Parallelogramm bildende Streben angeordnet sind, die mit ihren Enden jeweils um eine waagerechte Achse verschwenkbar gelagert sind,
**dadurch gekennzeichnet,**
daß die Streben (4,5) in jeweils einer von mehreren definierten Stellungen, die der tiefsten und höchsten sowie mindestens einer Zwischenstellung der Zugeinrichtung (7) entsprechen, durch mindestens eine formschlüssige Kupplungseinrichtung arretierbar sind, die aus einem bolzenförmigen, in eine Aufnahmebohrung (8) der einen Strebe (4 bzw. 5) einsetzbaren Verbindungselement (9) und einer mehrere Stellungen für das Verbindungselement (9) definierenden Rasteinrichtung an der jeweils anderen Strebe (5 bzw. 4) besteht.

2. Zugdeichsel nach Anspruch 1, dadurch gekennzeichnet, daß die Rasteinrichtung als eine Lochreihe aus mehreren, auf einem Kreisbogenabschnitt angeordneten Löchern (10) ausgebildet ist.

3. Zugdeichsel nach Anspruch 2, dadurch gekennzeichnet, daß mehrere Lochreihen mit versetzt zueinander angeordneten Löchern (10) und einer der Zahl der Lochreihen entsprechende Anzahl von Aufnahmebohrungen (8) vorgesehen sind.

4. Zugdeichsel nach Anspruch 1, dadurch gekennzeichnet, daß die Rasteinrichtung als kreisbogenabschnittförmiges Segment (14) mit einer Stirnverzahnung (14a) ausgebildet ist, in die ein entsprechend verzahntes Kupplungsstück (15) formschlüssig eingreift, das auf dem bolzenförmigen, innerhalb eines bogenförmigen Langloches (14b) im Segment (14) bewegbaren Verbindungselement (9) angeordnet ist.

5. Zugdeichsel nach Anspruch 4, dadurch gekennzeichnet, daß zwei einander gegenüberliegende Segmente (14) und zwei auf dem Verbindungselement (9) angeordnete Kupplungsstücke (15) vorgesehen sind, von denen das eine Kupplungsstück (15) mit dem Verbindungselement (9) fest verbunden und das andere Kupplungsstück (15) axial beweglich auf dem Verbindungselement (9) angeordnet und durch eine Mutter (9b) zur formschlüssigen Festlegung beider Kupplungsstücke (15) in den Stirnverzahnungen (14a) der Segmente (14) anziehbar ist.

6. Zugdeichsel nach Anspruch 4 oder 5, dadurch gekennzeichnet, daß an den Kupplungsstücken (15) mindestens eine in das bogenförmige Langloch (14b) eingreifende Führungsnase (17) angeordnet ist.

7. Zugdeichsel nach einem der Ansprüche 1 bis 6, dadurch gekennzeichnet, daß die eine Strebe (5) als in der Längsmitte der Zugdeichsel liegender Träger mit U-förmigem Querschnitt und die andere Strebe (4) als Doppelstrebe mit zu beiden Seiten des Trägers verlaufenden Teilen ausgebildet ist.

8. Zugdeichsel nach Anspruch 7, dadurch gekennzeichnet, daß auch die andere Strebe (4) als Träger mit U-förmigem Querschnitt ausgebildet ist, dessen Schenkel außerhalb der Schenkel der in der Längsmitte liegenden Strebe (5) verlaufen.

9. Zugdeichsel nach Anspruch 7 und 8, dadurch gekennzeichnet, daß einer der Träger im Bereich seiner Schenkel mit zwei parallel zueinander verlaufenden Rasteinrichtungen und der andere Träger im Bereich seiner Schenkel mit jeweils einer Aufnahmebohrung (8) für das vorzugsweise als Steckbolzen ausgebildete Verbindungselement (9) versehen sind.

10. Zugdeichsel nach mindestens einem der Ansprüche 1 bis 9, dadurch gekennzeichnet, daß zwischen einer Strebe (4 bzw. 5) und einer waagerechten Achse (5a bzw. 4a) der anderen Strebe (5 bzw. 4) ein das Gewicht der höhenverstellbaren Teile zumindest teilweise ausgleichender Kraftspeicher (13) angeordnet ist.

11. Zugdeichsel nach Anspruch 10, dadurch gekennzeichnet, daß der Kraftspeicher (13) als steuerbarer Druckmittelzylinder ausgebildet ist.
